(19) Europäisches Patentamt

European Patent Office

Office européen des brevets

(11) **EP 4 166 406 A1**

(12) **EUROPEAN PATENT APPLICATION**
published in accordance with Art. 153(4) EPC

(43) Date of publication:
**19.04.2023 Bulletin 2023/16**

(21) Application number: **21822721.3**

(22) Date of filing: **11.05.2021**

(51) International Patent Classification (IPC):
**B60W 30/165** (2020.01)   **B62D 6/00** (2006.01)
**B62D 47/02** (2006.01)   **B62D 53/00** (2006.01)
**B62D 12/02** (2006.01)

(86) International application number:
**PCT/CN2021/093022**

(87) International publication number:
**WO 2021/249088 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.06.2020   CN 202010522486**

(71) Applicant: **CRRC Zhuzhou Locomotive Co., Ltd.**
**Zhuzhou, Hunan 412001 (CN)**

(72) Inventors:
 • **SHEN, Longjiang**
  **Zhuzhou, Hunan 412001 (CN)**

 • **TAO, Gongan**
  **Zhuzhou, Hunan 412001 (CN)**
 • **ZHANG, Jianquan**
  **Zhuzhou, Hunan 412001 (CN)**
 • **YU, Jiawen**
  **Zhuzhou, Hunan 412001 (CN)**
 • **KONG, Yuanyuan**
  **Zhuzhou, Hunan 412001 (CN)**
 • **WANG, Linfeng**
  **Zhuzhou, Hunan 412001 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **MULTI-ARTICULATED VEHICLE AND TRAJECTORY-FOLLOWING CONTROL METHOD THEREFOR, AND SYSTEM**

(57)     A multi-articulated vehicle and a trajectory-following control method therefor, and system. The control method comprises: determining, according to a motion path length, whether a following section is currently in a historical position of a leading section; and if so, controlling a yaw angle and a sideslip angle of the following section by using a yaw angle and a sideslip angle corresponding to a motion path length of the historical position of the leading section as target values, so as to control the following section to follow a trajectory of the leading section. The control method controls the yaw angle and the sideslip angle, such that the multi-articulated vehicle follows a trajectory, thereby improving the safety and reliability of the traveling vehicle, and improving following control precision. In addition, motion path lengths of a leading point and a following point use the following point as a starting point, thereby avoiding a following error caused by a distance between the following point and the leading point, and further improving following precision.

Fig. 1

**Description**

**FIELD OF THE INVENTION**

The present invention belongs to the technical field of vehicle control, and in particular relates to a trajectory following control method and system for a multi-articulated vehicle, and a multi-articulated vehicle.

**BACKGROUND OF THE INVENTION**

With the continuous expansion of the city scale, the pressure of public transportation is increasing. The one-way transportation volume of a conventional two-axle or three-axle bus is limited. Although the increase in bus frequency can alleviate the transportation pressure to a certain extent, the transportation cost and management raise additional questions for the bus company. As a public transportation solution, multi-articulated buses have gradually been taken seriously by domestic local governments. A multi-articulated bus is formed by connecting two or three articulation systems, usually with three or four compartments, which expands the vehicle body, improves the transportation capacity, and does not require preliminary rail construction. However, due to the increase in the length of the vehicle body, the handling stability of the bus is poor, and the driver's experience is very demanding under the conditions of turning, changing lanes, etc. Therefore, trajectory following control over sub-compartments must be formulated, otherwise the road operation safety is seriously affected.

The patent document with publication number CN1052922449A discloses a "Trajectory Following Control Method for Low-Floor Intelligent Rail Train with Rubber Wheels", and the patent document with publication number CN105292256A discloses a "Multi-Axle Turning Trajectory following Closed-Loop Control Method for Low-Floor Intelligent Rail Train with Rubber Wheels". The two documents mainly formulate following strategies according to the turning angle relationship of each axle of the train, but nonetheless ignore lateral deviation characteristics and nonlinear characteristics of tire existing in the actual operation of the train, which may easily lead to a greater deviation between a calculated ideal turning angle and an actual turning angle, low following precision, and poor adaptability to complex working conditions.

**SUMMARY OF THE INVENTION**

In view of the deficiencies of the prior art, the present invention provides a multi-articulated vehicle and a trajectory following control method and system therefor to solve the problems of low following precision and poor adaptability.

The present invention solves the above technical problems through the following technical solution: a trajectory following control method for a multi-articulated vehicle, the multi-articulated vehicle including a main compartment and N sub-compartments, N≥2, the trajectory following control method including:

Step 1: acquiring yaw rates, longitudinal accelerations and lateral accelerations of a leading point and a following point;

The leading point is any measurement point on a leading compartment, the following point is any measurement point on a following compartment, the leading compartment is the current compartment, the following compartment is the previous compartment of the current compartment, and the position of the following point corresponds to the position of the leading point;

Step 2: in a global coordinate system of the leading compartment, calculating a yaw angle, a longitudinal velocity and a lateral velocity of the leading point respectively according to the yaw rate, longitudinal acceleration and lateral acceleration of the leading point, and then calculating, according to the longitudinal velocity and the lateral velocity, a side slip angle of the leading point and, with reference to the following point as a starting point, a motion path length of the leading point;

The global coordinate system of the leading compartment is established with the leading point as a coordinate origin, the advancing direction of the leading compartment as a positive direction of an x-axis, and the direction, that the leading point points to the left side of the leading compartment when the leading compartment is advancing, as a positive direction of a $y$-axis, and the global coordinate system of the leading compartment is established according to the right-hand rule;

In a global coordinate system of the following compartment, calculating a yaw angle, a longitudinal velocity and a lateral velocity of the following point respectively according to the yaw rate, longitudinal acceleration and lateral acceleration of the following point, and then calculating, according to the longitudinal velocity and the lateral velocity, a side slip angle of the following point and, with reference to the following point as a starting point, a motion path length of the following point;

The global coordinate system of the following compartment is established with the following point as a coordinate origin, the advancing direction of the following compartment as a positive direction of an x-axis, and the direction, that the following point points to the left side of the following compartment when the following compartment is advancing, as a positive direction of a y-axis, and the global coordinate system of the following compartment is established according to the right-hand rule;

Step 3: when the motion path length of the following point at the current time is equal to the motion path length of the leading point at a historical time, controlling a yaw angle and a side slip angle of the following point at the current time to realize trajectory following of the following compartment to the leading compartment, wherein the yaw angle and the side slip angle corresponding to the motion path length of the leading point at the historical time are taken as a target yaw angle and a target side slip angle respectively.

According to the trajectory following control method of the present invention, whether the following compartment is currently at a historical position of the leading compartment is determined according to the motion path length, and if so, the yaw angle and side slip angle of the following compartment are controlled with the yaw angle and side slip angle corresponding to the motion path length at the historical position of the leading compartment as target values, so as to control trajectory following of the following compartment to the leading compartment. The control method controls the yaw angle and the side slip angle to realize trajectory following of the multi-articulated vehicle, that is, the first compartment follows the main compartment, the second compartment follows the first compartment, and so on, which realizes trajectory following of multiple compartments. Because the yaw angle and the side slip angle are important status parameters of vehicle stability control, the trajectory following with the yaw angle and the side slip angle as control objects not only improves the safety and reliability of vehicle driving, but also improves the following control precision. Meanwhile, both of the motion path lengths of the leading point and the following point use the following point as a starting point, which avoids a following error caused by a distance between the following point and the leading point and further improves the following precision.

Further, in step 1, the yaw rate is measured with a yaw rate sensor, and the longitudinal acceleration and the lateral acceleration are measured with a three-axis acceleration sensor.

Preferably, both the yaw rate sensor and the three-axis acceleration sensor are installed at the middle part of the compartment. The middle part of the compartment better reflects the attitude or trajectory of the compartment, so the attitude or trajectory of the compartment can be obtained more accurately by the sensors arranged at the middle part of the compartment, which further improves the trajectory following precision.

Further, in step 2, the global coordinate system of the leading compartment is established according to the right-hand rule, with the leading point as the coordinate origin, the advancing direction of the leading compartment as the positive direction of the x-axis, and the direction, that the leading point points to the left side of the leading compartment when the leading compartment is advancing, as the positive direction of the y-axis; the global coordinate system of the following compartment is established according to the right-hand rule, with the following point as the coordinate origin, the advancing direction of the following compartment as the positive direction of the x-axis, and the direction, that the following point points to the left side of the following compartment when the following compartment is advancing, as the positive direction of the y-axis;

The calculation expression of the yaw angle is:

$$\varphi_R = \int_0^t \omega_R dt$$

Herein, R represents the leading point or the following point, $\varphi_R$, is the yaw angle of the leading point or the following point at time $t$, and $\omega_R$ is the yaw rate of the leading point or the following point at time $t$;

The calculation expression of the side slip angle is:

$$\beta_R = \tan^{-1}(v_{Ry} / v_{Rx}), \quad v_{Ry} = \int_0^t \alpha_{Ry} dt, \quad v_{Rx} = \int_0^t \alpha_{Rx} dt$$

Herein, $\beta_R$ is the side slip angle of the leading point or the following point at time $t$, $v_{Ry}$ and $v_{Rx}$ are respectively the longitudinal velocity and lateral velocity of the leading point or the following point at time $t$, $\alpha_{Ry}$ and $\alpha_{Rx}$ are respectively the longitudinal acceleration and lateral acceleration of the leading point or the following point at time $t$;

The calculation expressions of the motion path lengths of the leading point and the following point are respectively:

$$S_A = \int_0^t v_{Ax}\,dt + L, \quad S_B = \int_0^t v_{Bx}\,dt$$

Herein, *A* and *B* respectively represent the leading point and the following point, $S_A$ and $S_B$ are respectively the motion path lengths of the leading point A and the following point B at time *t*, $v_{Ax}$ and $v_{Bx}$ are respectively the lateral velocities of the leading point *A* and the following point *B* at time *t*, and *L* is the distance between the leading point *A* and the following point *B*.

Further, the control method further includes the step of curve fitting between step 2 and step 3, specifically: fitting a curve of motion path length - yaw angle and a curve of motion path length - side slip angle according to the motion path length, yaw angle and side slip angle of the leading point.

Further, step 3 is replaced by: determining, according to the curve of motion path length - yaw angle and the curve of motion path length - side slip angle, a yaw angle and a side slip angle corresponding to the motion path length of the following point at the current time on the curve of motion path length - yaw angle and the curve of motion path length - side slip angle respectively, and controlling a yaw angle and a side slip angle of the following point at the current time with the corresponding yaw angle and the corresponding side slip angle on the curves taken as the target yaw angle and the target side slip angle, to realize trajectory following of the following compartment to the leading compartment.

Discrete data are fitted into continuous curves, and then the corresponding yaw angle and the corresponding side slip angle on the curves are used as target values, which solves the problem in the following when the motion path length of the following point is less than the distance L between the following point and the leading point, so that the following point has a following object at any time, and can follow the attitude or trajectory of the leading point, thereby further improving the following precision.

Further, in step 3, the target yaw angle and the yaw angle of the following point are used as the input of a first PID control unit, a first controlled turning angle is used as the output of the first PID control unit, the target side slip angle and the side slip angle of the following point are used as the input of a second PID control unit, and a second controlled turning angle is used as the output of the second PID control unit;

A real-time turning angle of the following point is calculated according to the first controlled turning angle and the second controlled turning angle, and the real-time turning angle is controlled to realize the trajectory following of the following compartment to the leading compartment.

The above method using PID control is simple in control and strong in adaptability, and also has good adaptability to complex working conditions.

Further, the calculation expression of the real-time turning angle of the following point is:

$$\delta = \left(1 - k\right)\Delta\delta_1 + k \bullet \Delta\delta_2$$

Herein, $\delta$ is the real-time turning angle of the following point, $\Delta\delta_1$ is the first controlled turning angle, $\Delta\delta_2$ is the second controlled turning angle, and k is a coefficient related to the vehicle speed and the side slip angle.

It is not difficult to understand that, in the present invention, when the yaw rate sensor and the three-axis acceleration sensor are used, the sensors are installed on the corresponding reference point (i.e., the leading point or the following point).

The present invention further provides a trajectory following control system for a multi-articulated vehicle, the multi-articulated vehicle including a main compartment and N sub-compartments, N≥2, the trajectory following control system including computer equipment, and the computer equipment being configured or programmed to perform the steps of the above-mentioned method. Specifically, the computer equipment of the present invention may include:

a data acquisition unit, configured to acquire yaw rates, longitudinal accelerations and lateral accelerations of a leading point and a following point, the leading point being any measurement point on a leading compartment, the following point being any measurement point on a following compartment, the leading compartment being the current compartment, the following compartment being the previous compartment of the current compartment, and the position of the following point corresponding to the position of the leading point;
a parameter calculation unit, configured to, in a global coordinate system of the leading compartment, calculate a yaw angle, a longitudinal velocity and a lateral velocity of the leading point respectively according to the yaw rate, longitudinal acceleration and lateral acceleration of the leading point, and then calculate, according to the longitudinal velocity and the lateral velocity, a side slip angle of the leading point and, with reference to the following point as a starting point, a motion path length of the leading point,
and
in a global coordinate system of the following compartment, calculate a yaw angle, a longitudinal velocity and a lateral velocity of the following point respectively according to the yaw rate, longitudinal acceleration and lateral acceleration of the following point, and then calculate, according to the longitudinal velocity and the lateral velocity, a side slip angle of the following point and, with reference to the following point as a starting point, a motion path length of the following point,

wherein the global coordinate system of the leading compartment is established according to the right-hand rule, with the leading point as a coordinate origin, the advancing direction of the leading compartment as a positive direction of an x-axis, and the direction, that the leading point points to the left side of the leading compartment when the leading compartment is advancing, as a positive direction of a *y*-axis, and

wherein the global coordinate system of the following compartment is established according to the right-hand rule, with the following point as a coordinate origin, the advancing direction of the following compartment as a positive direction of an x-axis, and the direction, that the following point points to the left side of the following compartment when the following compartment is advancing, as a positive direction of a *y*-axis; and

a following control unit, configured to, when the motion path length of the following point at the current time is equal to the motion path length of the leading point at a historical time, control the yaw angle and side slip angle of the following point at the current time with the yaw angle and side slip angle corresponding to the motion path length of the leading point at the historical time taken as a target yaw angle and a target side slip angle, to realize trajectory following of the following compartment to the leading compartment.

Further, the computer equipment further includes a curve fitting unit, which is configured to fit a curve of motion path length - yaw angle and a curve of motion path length - side slip angle according to the motion path length, yaw angle and side slip angle of the leading point;

The following control unit can be replaced by being configured to determine, according to the curve of motion path length - yaw angle and the curve of motion path length - side slip angle, a yaw angle and a side slip angle corresponding to the motion path length of the following point at the current time on the curve of motion path length - yaw angle and the curve of motion path length - side slip angle respectively, and control the yaw angle and side slip angle of the following point at the current time with the corresponding yaw angle and the corresponding side slip angle on the curves taken as the target yaw angle and the target side slip angle, to realize trajectory following of the following compartment to the leading compartment.

The present invention further provides a multi-articulated vehicle, including the above-mentioned trajectory following control system for the multi-articulated vehicle.

The historical time in the present invention refers to any time before the current time.

Beneficial effects are as follows:

Compared with the prior art, the present invention provides a multi-articulated vehicle and a trajectory following control method and system therefor, in which whether a following compartment is currently at a historical position of a leading compartment is determined according to a motion path length, and if so, a yaw angle and a side slip angle of the following compartment are controlled with a yaw angle and a side slip angle corresponding to the motion path length at the historical position of the leading compartment as target values, so as to control trajectory following of the following compartment to the leading compartment. The control method controls the yaw angle and the side slip angle to realize trajectory following of the multi-articulated vehicle, which not only improves the safety and reliability of vehicle driving, but also improves the following control precision. Meanwhile, motion path lengths of a leading point and a following point both use the following point as a starting point, which avoids a following error caused by a distance between the following point and the leading point and further improves the following precision.

**BRIEF DESCRIPTION OF THE DRAWINGS**

In order to illustrate the technical solutions of the present invention more clearly, the following briefly introduces the accompanying drawings used in the description of the embodiments. Obviously, the drawings in the following description are only an embodiment of the present invention, and those of ordinary skill in the art can obtain other drawings according to the drawings without any creative effort.

FIG. 1 is a control flowchart of a trajectory following control method for a multi-articulated vehicle in an embodiment of the present invention; and

FIG. 2 is a schematic diagram of establishment of a global coordinate system in an embodiment of the present invention.

**DETAILED DESCRIPTION OF THE EMBODIMENTS**

A clear and complete description will be made to the technical solutions in the present invention below with reference to the accompanying drawings in the embodiments of the present invention. Apparently, the embodiments described are only part of the embodiments of the present invention, not all of them. All other embodiments obtained by those of ordinary skill in the art based on the embodiments of the present invention without any creative effort shall fall within the protection scope of the present invention.

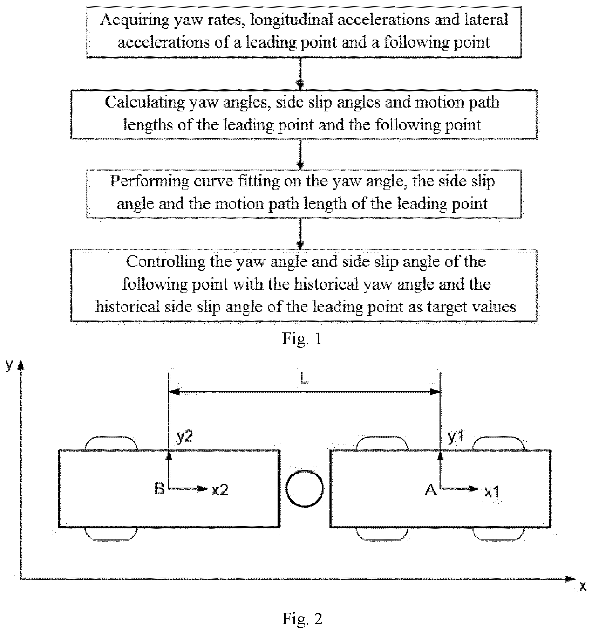

As shown in FIG. 1, the present invention provides a trajectory following control method for a multi-articulated vehicle. The multi-articulated vehicle includes a main compartment and N sub-compartments, and N≥2. The trajectory following control method includes the following steps.

1. Acquire yaw rates, longitudinal accelerations and lateral accelerations of a leading point and a following point.

The leading point is any measurement point on a leading compartment, the following point is any measurement point on a following compartment, the leading compartment is the current compartment, the following compartment is the previous compartment of the current compartment, and the position of the following point corresponds to the position of the leading point (i.e. if the leading point is at the middle part of the leading compartment, the following point is at the middle part of the following compartment; if the leading point is at the front end of the leading compartment, the following point is at the front end of the following compartment), which ensures that the leading point and the following point are respectively located at the same position on different compartments, thereby improving the following precision. For example, the first sub-compartment takes the main compartment as the leading compartment, the first sub-compartment is the following compartment, the leading point is a measurement point on the main compartment, and the following point is a measurement point on the first sub-compartment. The trajectory following of the multi-articulated vehicle is that the first sub-compartment follows the main compartment, the second sub-compartment follows the first sub-compartment, and so on, to achieve the following of all sub-compartments.

The leading point or the following point is a measurement point on the compartment. The yaw rate is measured with a yaw rate sensor, and the longitudinal acceleration and the lateral acceleration are measured with a three-axis acceleration sensor. The installation position of the sensors (the yaw rate sensor and the three-axis acceleration sensor) is used as a measurement point, that is, the leading point or the following point is the installation position of the sensor on the corresponding compartment. Both the yaw rate sensor and the three-axis acceleration sensor are installed at the middle part of the compartment (the leading compartment or the following compartment). The middle part of the compartment better reflects the attitude or trajectory of the compartment, so the arrangement of the sensors at the middle part of the compartment can more accurately obtain the attitude or trajectory of the compartment, which further improves the trajectory following precision. For example, when the first sub-compartment follows the main compartment, the installation position of the yaw rate sensor and the three-axis acceleration sensor on the main compartment is the leading point, and the installation position of the yaw rate sensor and the three-axis acceleration sensor on the first sub-compartment is the following point.

When the longitudinal acceleration and the lateral acceleration are measured, the three coordinate axis directions of the three-axis acceleration sensor are consistent with the three axis directions of the corresponding global coordinate system (the global coordinate system of the leading compartment and the global coordinate system of the following compartment).

The yaw rate (the measurement process may also be seen in CN 201710880958.8) refers to the rotation of the vehicle around the axis perpendicular to a road surface, the magnitude of the rotation reflects the stability of the vehicle, the longitudinal acceleration refers to an acceleration in the advancing direction of the vehicle, and the lateral acceleration refers to an acceleration in the direction perpendicular to a moving direction of the vehicle.

2. In a global coordinate system of the leading compartment, calculate a yaw angle, a longitudinal velocity and a lateral velocity of the leading point respectively according to the yaw rate, longitudinal acceleration and lateral acceleration of the leading point, and then calculate, according to the longitudinal velocity and the lateral velocity, a side slip angle of the leading point and, with reference to the following point as a starting point, a motion path length of the leading point.

The global coordinate system of the leading compartment is established according to the right-hand rule, with the leading point as a coordinate origin, the advancing direction of the leading compartment as a positive direction of an x-axis, and the direction, that the leading point points to the left side of the leading compartment when the leading compartment is advancing, as a positive direction of a *y*-axis; and the global coordinate system of the following compartment is established according to the right-hand rule, with the following point as a coordinate origin, the advancing direction of the following compartment as a positive direction of an x-axis, and the direction, that the following point points to the left side of the following compartment when the following compartment is advancing, as a positive direction of a *y*-axis.

As shown in FIG. 2, an example that the first sub-compartment follows the main compartment is provided, point A represents the leading point on the main compartment, and point B represents the following point on the first sub-compartment. The global coordinate system $x_1 y_1$ of the main compartment is established with the direction that the leading point A points to the head of the main compartment as an $x_1$ axis, and the direction, that the leading point A points to the left side of the leading compartment, as a $y_1$ axis; and the global coordinate system $x_2 y_2$ of the first sub-compartment is established with the direction that the following point B points to the head of the first sub-compartment as an $x_2$ axis, and the direction, that the following point B points to the left side of the first sub-compartment, as a $y_2$ axis. L is the distance between the leading point A and the following point B. The calculation expression of the yaw angle of the leading point A is:

$$\varphi_A = \int_0^t \omega_A dt$$

Herein, $\varphi_A$ is the yaw angle of the leading point A at time $t$, and $\omega_A$ is the yaw rate of the leading point A at time $t$.
The calculation expression of the side slip angle of the leading point A is:

$$\beta_A = \tan^{-1}(v_{Ay} / v_{Ax}), \quad v_{Ay} = \int_0^t \alpha_{Ay} dt, \quad v_{Ax} = \int_0^t \alpha_{Ax} dt$$

Herein, $\beta_A$ is the side slip angle of the leading point A at time $t$, $v_{Ay}$ and $v_{Ax}$ are respectively the longitudinal velocity and lateral velocity of the leading point A at time $t$, $\alpha_{Ay}$ and $\alpha_{Ax}$ are respectively the longitudinal acceleration and lateral acceleration of the leading point A at time $t$.
The calculation expression of the motion path length of the leading point A is:

$$S_A = \int_0^t v_{Ax} dt + L$$

Herein, $S_A$ is the motion path length of the leading point A at time $t$. The motion path length of the leading point starts from the following point B, which avoids a following error caused by the circumstance that the following is carried out before the following point B reaches the leading point A due to the distance L between the following point B and the leading point A, thereby further improving the following precision.
A sampling period is set, a group of motion path lengths, yaw angles and side slip angles of the leading point A are obtained in each sampling period and saved, and multiple groups of motion path lengths, yaw angles and side slip angles are obtained by multiple sampling, which facilitates indexing of the target yaw angle and target side slip angle of the following compartment.
In a global coordinate system of the following compartment, calculate a yaw angle, a longitudinal velocity and a lateral velocity of the following point respectively according to the yaw rate, longitudinal acceleration and lateral acceleration of the following point, and then calculate, according to the longitudinal velocity and the lateral velocity, a side slip angle of the following point and, with reference to the following point as a starting point, a motion path length of the following point.
The calculation expression of the yaw angle of the following point B is:

$$\varphi_B = \int_0^t \omega_B dt$$

Herein, $\varphi_B$ is the yaw angle of the following point B at time $t$, and $\omega_B$ is the yaw rate of the following point B at time $t$.
The calculation expression of the side slip angle of the following point B is:

$$\beta_B = \tan^{-1}(v_{By} / v_{Bx}), \quad v_{By} = \int_0^t \alpha_{By} dt, \quad v_{Bx} = \int_0^t \alpha_{Bx} dt$$

Herein, $\beta_B$ is the side slip angle of the following point B at time $t$, $v_{By}$ and $v_{Bx}$ are respectively the longitudinal velocity and lateral velocity of the following point B at time $t$, $\alpha_{By}$ and $\alpha_{Bx}$ are respectively the longitudinal acceleration and lateral acceleration of the following point B at time $t$.

The calculation expression of the motion path length of the following point B is:

$$S_B = \int_0^t v_{Bx} dt$$

Herein, $S_B$ is the motion path length of the following point B at time $t$.

3. Fit a curve of motion path length - yaw angle and a curve of motion path length - side slip angle according to the motion path length, yaw angle and side slip angle of the leading point.

Multiple groups of motion path lengths, yaw angles and side slip angles are fitted by interpolation or other fitting methods to obtain the curve of motion path length - yaw angle and the curve of motion path length - side slip angle. Through curve fitting, the corresponding yaw angle and the corresponding side slip angle, when the motion path length of the leading point is less than L, can be obtained, and the yaw angle and side slip angle corresponding to any motion path length can be obtained, which solves the following problem when the motion path length of the following point is less than L, so that the following point has a following object at any time (that is, no matter what the motion path length of the following point is (even if it is less than L)) and can follow the attitude or trajectory of the leading point, thereby further improving the following precision.

4. Carrying out trajectory following control of the following compartment to the leading compartment with the yaw angle and the side slip angle as control objects.

Regardless of whether the curve fitting is performed, the target values can be determined by the following steps: when the motion path length of the following point at the current time $T_1$ is equal to the motion path length of the leading point at a historical time $T_2$, controlling the yaw angle and side slip angle of the following point at the current time, wherein the yaw angle and side slip angle corresponding to the motion path length of the leading point at the historical time $T_2$ are respectively a target yaw angle and a target side slip angle, to realize trajectory following of the following compartment to the leading compartment, where the current time $T_1$ > the historical time $T_2$.

When the sampling period of the leading point is shorter than the sampling period of the following point, and when the sampling period of the leading point is set to be small enough, for each motion path length of the following point that is greater than or equal to the distance L, there exists a historical motion path length of the leading point which is equal to the motion path length of the following point. That is, both the target yaw angle and the target side slip angle can be found.

If the curve fitting is performed with multiple groups of motion path lengths, yaw angles and side slip angles of the leading point as discrete points to obtain the curve of motion path length - yaw angle and the curve of motion path length - side slip angle, the target values can be determined by the following steps: determining, according to the curve of motion path length - yaw angle and the curve of motion path length - side slip angle, a yaw angle and a side slip angle corresponding to the motion path length of the following point at the current time on the curves, and controlling a yaw angle and a side slip angle of the following point at the current time with the corresponding yaw angle and the corresponding side slip angle determined by the curves as the target yaw angle and the target side slip angle, to realize trajectory following of the following compartment to the leading compartment.

Through curve fitting, the corresponding yaw angle and the corresponding side slip angle when the motion path length of the leading point is less than L can be obtained, and the target yaw angle and the target side slip angle when the motion path length of the following point is any value (including the motion path length less than L) can be obtained according to the curves.

In this embodiment, PID control is used for the control of the yaw angle and the side slip angle, so that the control process is simple, the adaptability is strong, and the method has good adaptability to complex working conditions. The specific control process is:

Take the target yaw angle and the yaw angle of the following point as the input of a first PID control unit, a first controlled turning angle as the output of the first PID control unit, the target side slip angle and the side slip angle of the following point as the input of a second PID control unit, and a second controlled turning angle as the output of the second PID control unit; calculate a real-time turning angle of the following point according to the first controlled turning angle and the second controlled turning angle, and control the real-time turning angle to realize the trajectory following of the following compartment to the leading compartment. The calculation expression of the real-time turning angle of the following point is:

$$\delta = \left(1 - k\right) \Delta\delta_1 + k \bullet \Delta\delta_2$$

Herein, $\delta$ is the real-time turning angle of the following point, $\Delta\delta_1$ is the first controlled turning angle, $\Delta\delta_2$ is the

second controlled turning angle, $\Delta\delta_1 = PID1(\varphi'_B, \varphi_B)$, $\Delta\delta_2 = PID2(\beta'_B, \beta_B)$, $\varphi'_B$ and $\beta'_B$ are respectively the target yaw angle and the target side slip angle. $k$ is a coefficient related to the vehicle speed and the side slip angle. During low-speed turning, the side slip angle of the compartment is small, the yaw rate at this time can reflect the motion state of the vehicle, and k may be equal to 0. During high-speed turning, the side slip angle of the compartment is large, and the k value needs to be increased.

The present invention further provides a trajectory following control system for a multi-articulated vehicle, the multi-articulated vehicle including a main compartment and N sub-compartments, N≥2, the trajectory following control system including computer equipment, and the computer equipment being configured or programmed to perform the steps of the above-mentioned trajectory following control method. Specifically, the computer equipment of this embodiment includes:

a data acquisition unit, configured to acquire yaw rates, longitudinal accelerations and lateral accelerations of a leading point and a following point, the leading point being any measurement point on a leading compartment, the following point being any measurement point on a following compartment, the leading compartment being the current compartment, the following compartment being the previous compartment of the current compartment, and the position of the following point corresponding to the position of the leading point;

a coordinate system establishment unit, configured to establish a global coordinate system of the leading compartment according to the right-hand rule, with the direction, that the leading point points to the head of the leading compartment and that is parallel to the leading compartment, as an x-axis, and the direction, that the leading point points to the left side of the leading compartment, as a y-axis; and establish a global coordinate system of the following compartment according to the right-hand rule, with the direction, that the following point points to the head of the following compartment and that is parallel to the following compartment, as an x-axis, and the direction, that the following point points to the left side of the following compartment, as a y-axis;

a parameter calculation unit, configured to, in the global coordinate system of the leading compartment, calculate a yaw angle, a longitudinal velocity and a lateral velocity of the leading point respectively according to the yaw rate, longitudinal acceleration and lateral acceleration of the leading point, and then calculate, according to the longitudinal velocity and the lateral velocity, a side slip angle of the leading point and, with reference to the following point as a starting point, a motion path length of the leading point,

and configured to, in the global coordinate system of the following compartment, calculate a yaw angle, a longitudinal velocity and a lateral velocity of the following point respectively according to the yaw rate, longitudinal acceleration and lateral acceleration of the following point, and then calculate, according to the longitudinal velocity and the lateral velocity, a side slip angle of the following point and, with reference to the following point as a starting point, a motion path length of the following point; and

a following control unit, configured to, when the motion path length of the following point at the current time is equal to the motion path length of the leading point at a historical time, control the yaw angle and side slip angle of the following point at the current time, wherein the yaw angle and side slip angle corresponding to the motion path length of the leading point at the historical time are respectively a target yaw angle and a target side slip angle, to realize trajectory following of the following compartment to the leading compartment.

The computer equipment of the present invention further includes a curve fitting unit, which is configured to fit a curve of motion path length - yaw angle and a curve of motion path length - side slip angle according to the motion path length, yaw angle and side slip angle of the leading point; and the following control unit can be replaced by being configured to determine, according to the curve of motion path length - yaw angle and the curve of motion path length - side slip angle, a yaw angle and a side slip angle corresponding to the motion path length of the following point at the current time on the curve of motion path length - yaw angle and the curve of motion path length - side slip angle respectively, and control the yaw angle and side slip angle of the following point at the current time with the corresponding yaw angle and the corresponding side slip angle on the curves taken as the target yaw angle and the target side slip angle, to realize trajectory following of the following compartment to the leading compartment.

Described above are the specific embodiments of the present invention only, but the protection scope of the present invention is not limited thereto. Any skilled person who is familiar with this art could readily conceive of variations or modifications within the disclosed technical scope of the present invention, and these variations or modifications shall fall within the protection scope of the present invention.

**Claims**

1. A trajectory following control method for a multi-articulated vehicle, wherein the trajectory following control method comprises:

step 1, acquiring yaw rates, longitudinal accelerations and lateral accelerations of a leading point and a following point,

wherein the leading point is any measurement point on a leading compartment, the following point is any measurement point on a following compartment, the leading compartment is the current compartment, the following compartment is the previous compartment of the current compartment, and the position of the following point corresponds to the position of the leading point;

step 2, in a global coordinate system of the leading compartment, calculating a yaw angle, a longitudinal velocity and a lateral velocity of the leading point respectively according to the yaw rate, longitudinal acceleration and lateral acceleration of the leading point, and then calculating, according to the longitudinal velocity and the lateral velocity, a side slip angle of the leading point and, with reference to the following point as a starting point, a motion path length of the leading point,

wherein the global coordinate system of the leading compartment is established according to the right-hand rule, with the leading point as a coordinate origin, the advancing direction of the leading compartment as a positive direction of an x-axis, and a direction, that the leading point points to a left side of the leading compartment when the leading compartment is advancing, as a positive direction of a y-axis, and

in a global coordinate system of the following compartment, calculating a yaw angle, a longitudinal velocity and a lateral velocity of the following point respectively according to the yaw rate, longitudinal acceleration and lateral acceleration of the following point, and then calculating, according to the longitudinal velocity and the lateral velocity, a side slip angle of the following point and, with reference to the following point as a starting point, a motion path length of the following point,

wherein the global coordinate system of the following compartment is established according to the right-hand rule, with the following point as a coordinate origin, the advancing direction of the following compartment as a positive direction of an x-axis, and a direction, that the following point points to a left side of the following compartment when the following compartment is advancing, as a positive direction of a *y*-axis; and

step 3, when the motion path length of the following point at a current time is equal to the motion path length of the leading point at a historical time, controlling a yaw angle and a side slip angle of the following point at the current time, wherein the yaw angle and side slip angle corresponding to the motion path length of the leading point at the historical time are taken as a target yaw angle and a target side slip angle respectively.

2. The trajectory following control method according to claim 1, wherein in step 1, the yaw rate is measured with a yaw rate sensor, and the longitudinal acceleration and the lateral acceleration are measured with a three-axis acceleration sensor; and
preferably, both the yaw rate sensor and the three-axis acceleration sensor are installed at a middle part of the compartment.

3. The trajectory following control method according to claim 1, wherein in step 2, the calculation formula of the yaw angle is:

$$\varphi_R = \int_0^t \omega_R dt \; ;$$

wherein R represents the leading point or the following point, $\varphi_R$ is the yaw angle of the leading point or the following point at time t, and $\omega_R$ is the yaw rate of the leading point or the following point at time t.

4. The trajectory following control method according to claim 1, wherein in step 2, the calculation formula of the side slip angle is:

$$\beta_R = \tan^{-1}(v_{Ry} / v_{Rx}), \; v_{Ry} = \int_0^t \alpha_{Ry} dt \;, \; v_{Rx} = \int_0^t \alpha_{Rx} dt \; ;$$

wherein $\beta_R$ is the side slip angle of the leading point or the following point at time *t*, $v_{Ry}$ and $v_{Rx}$ are respectively the longitudinal velocity and lateral velocity of the leading point or the following point at time *t*, $\alpha_{Ry}$ and $\alpha_{Rx}$ are respectively the longitudinal acceleration and lateral acceleration of the leading point or the following point at time t.

5. The trajectory following control method according to claim 1, wherein in step 2, the calculation formulas of the motion path lengths of the leading point and the following point are respectively:

$$S_A = \int_0^t v_{Ax}\,dt + L, \quad S_B = \int_0^t v_{Bx}\,dt \; ;$$

wherein $A$ and $B$ respectively represent the leading point and the following point, $S_A$ and $S_B$ are respectively the motion path lengths of the leading point A and the following point $B$ at time $t$, $v_{Ax}$ and $v_{Bx}$ are respectively the lateral velocities of the leading point $A$ and the following point $B$ at time $t$, and $L$ is the distance between the leading point $A$ and the following point $B$.

6.  The trajectory following control method according to one of claims 1 to 5, further comprising a step of curve fitting between step 2 and step 3, wherein the specific implementation process comprises:

    fitting a curve of motion path length - yaw angle and a curve of motion path length - side slip angle according to the motion path length, yaw angle and side slip angle of the leading point;
    wherein step 3 is replaced by: determining, according to the curve of motion path length - yaw angle and the curve of motion path length - side slip angle, a yaw angle and a side slip angle corresponding to the motion path length of the following point at the current time on the curve of motion path length - yaw angle and the curve of motion path length - side slip angle respectively, and controlling the yaw angle and side slip angle of the following point at the current time with the yaw angle and the side slip angle, respectively determined by the curve of motion path length - yaw angle and the curve of motion path length - side slip angle, taken as the target yaw angle and the target side slip angle.

7.  The trajectory following control method according to one of claims 1 to 6, wherein in step 3, the target yaw angle and the yaw angle of the following point are used as an input of a first PID control unit, a first controlled turning angle is used as an output of the first PID control unit, the target side slip angle and the side slip angle of the following point are used as an input of a second PID control unit, and a second controlled turning angle is used as an output of the second PID control unit; and
    a real-time turning angle of the following point is calculated according to the first controlled turning angle and the second controlled turning angle.

8.  The trajectory following control method according to claim 7, wherein the calculation formula of the real-time turning angle of the following point is:

$$\delta = \left(1 - k\right)\Delta\delta_1 + k \bullet \Delta\delta_2 \, ;$$

wherein $\delta$ is the real-time turning angle of the following point, $\Delta\delta_1$ is the first controlled turning angle, $\Delta\delta_2$ is the second controlled turning angle, and k is a coefficient related to the vehicle speed and the side slip angle.

9.  A trajectory following control system for a multi-articulated vehicle, wherein the trajectory following control system comprises computer equipment, wherein the computer equipment is configured or programmed to perform the steps of the trajectory following control method according to one of claims 1 to 8.

10. A multi-articulated vehicle, wherein the multi-articulated vehicle comprises the trajectory following control system for the multi-articulated vehicle according to claim 9.

Acquiring yaw rates, longitudinal accelerations and lateral accelerations of a leading point and a following point

Calculating yaw angles, side slip angles and motion path lengths of the leading point and the following point

Performing curve fitting on the yaw angle, the side slip angle and the motion path length of the leading point

Controlling the yaw angle and side slip angle of the following point with the historical yaw angle and the historical side slip angle of the leading point as target values

Fig. 1

Fig. 2

| | INTERNATIONAL SEARCH REPORT | International application No. |
|---|---|---|
| | | **PCT/CN2021/093022** |

**A.    CLASSIFICATION OF SUBJECT MATTER**

B60W 30/165(2020.01)i;  B62D 6/00(2006.01)i;  B62D 47/02(2006.01)i;  B62D 53/00(2006.01)i;  B62D 12/02(2006.01)i

According to International Patent Classification (IPC) or to both national classification and IPC

**B.    FIELDS SEARCHED**

Minimum documentation searched (classification system followed by classification symbols)

B62D; B60W

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI: 跟随点, 牵引点, 引领点, 轨迹, 路径, 跟随, 跟踪, 循迹, 侧偏角, 横摆角, 长度, 距离, trail+, tract+, track, path, trajectory, follow, side w slip w angle, lateral w angle, yaw w angle, distance, length

**C.    DOCUMENTS CONSIDERED TO BE RELEVANT**

| Category* | Citation of document, with indication, where appropriate, of the relevant passages | Relevant to claim No. |
|---|---|---|
| PX | CN 111661048 A (CRRC ZHUZHOU LOCOMOTIVE CO., LTD.) 15 September 2020 (2020-09-15) description, pages 4-8, figures 1-2 | 1-10 |
| A | CN 106327433 A (ZHEJIANG LEAPMOTOR TECHNOLOGY CO., LTD.) 11 January 2017 (2017-01-11) description, pages 4-5, figures 1-2 | 1-10 |
| A | CN 105292249 A (CSR ZHUZHOU ELECTRIC LOCOMOTIVE RESEARCH INSTITUTE CO., LTD.) 03 February 2016 (2016-02-03) entire document | 1-10 |
| A | EP 3373095 B1 (MAN TRUCK & BUS AG et al.) 13 May 2020 (2020-05-13) entire document | 1-10 |
| A | JP 09286346 A (MITSUBISHI MOTORS CORP.) 04 November 1997 (1997-11-04) entire document | 1-10 |
| A | CN 110309483 A (CRRC ZHUZHOU INSTITUTE CO., LTD. et al.) 08 October 2019 (2019-10-08) entire document | 1-10 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 July 2021** | **13 August 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/093022**

| C. | DOCUMENTS CONSIDERED TO BE RELEVANT | |
|---|---|---|
| Category* | Citation of document, with indication, where appropriate, of the relevant passages | Relevant to claim No. |
| A | CN 105564447 A (CSR ZHUZHOU ELECTRIC LOCOMOTIVE RESEARCH INSTITUTE CO., LTD.) 11 May 2016 (2016-05-11)<br>entire document | 1-10 |

Form PCT/ISA/210 (second sheet) (January 2015)

| International application No. |
| --- |
| **PCT/CN2021/093022** |

| Patent document cited in search report | | | Publication date (day/month/year) | Patent family member(s) | | | Publication date (day/month/year) |
| --- | --- | --- | --- | --- | --- | --- | --- |
| CN | 111661048 | A | 15 September 2020 | None | | | |
| CN | 106327433 | A | 11 January 2017 | None | | | |
| CN | 105292249 | A | 03 February 2016 | None | | | |
| EP | 3373095 | B1 | 13 May 2020 | DE | 102017002220 | A1 | 13 September 2018 |
| JP | 09286346 | A | 04 November 1997 | None | | | |
| CN | 110309483 | A | 08 October 2019 | None | | | |
| CN | 105564447 | A | 11 May 2016 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1052922449 A
- CN 105292256 A

- CN 201710880958